# EUROPEAN PATENT APPLICATION

(11) **EP 4 800 084 A1**
(43) Date of publication of application: **02.09.2026**
(21) Application number: 24882209.0
(22) Date of filing: 10.10.2024
(51) Int. Cl.: C09K 3/00, C08G 65/336, C08G 77/46, C08G 81/00, C09D 5/16, C09D 7/65, C09D 201/00

(54) **SURFACE MODIFIER AND COMPOSITION CONTAINING SAID SURFACE MODIFIER**

(30) Priority: 27.10.2023 JP 2023184611
(71) Applicant: SHIN-ETSU CHEMICAL CO., LTD., Tokyo 100-0005 (JP)
(72) Inventor: GOTO, Tomoyuki, Annaka-shi, Gunma 379-0224 (JP)
(74) Representative: Ipsilon
(86) International application number: PCT/JP2024/036282
(87) International publication number: WO 2025/089096

(57) **Abstract**

[Object]

An object of the present invention is to provide a surface modifier containing a water-soluble polyether-modified organopolysiloxane while maintaining the surface characteristics of polyether-modified organopolysiloxanes.

[Solution]

A surface modifier consisting of a polyether-modified organopolysiloxane having an oxyethylene group and an oxypropylene group, wherein the polyether-modified organopolysiloxane has an oxyethylene group content of 35% by mass or less, a 1% by mass aqueous solution of the polyether-modified organopolysiloxane has a haze value at 25°C of 5.0 or less, and the polyether-modified organopolysiloxane has a cloud number of 10 or more.

## Description

### TECHNICAL FIELD

The present invention relates to a surface modifier consisting of a polyether-modified organopolysiloxane having an oxyethylene group and an oxypropylene group, and to a composition comprising the surface modifier.

### BACKGROUND ART

Polyether-modified polyorganosiloxanes have excellent surface characteristics such as leveling properties, spreading properties, anti-fogging properties, stain resistance, wetting properties, and antistatic properties. Accordingly, polyether-modified polyorganosiloxanes are widely used in applications such as agricultural chemicals and coatings, or as additives for films or resins. However, since siloxane chains or oxypropylene chains are hydrophobic, when such materials are to be made water-soluble, it is necessary to increase hydrophilicity by some means. For example, there are methods such as increasing the proportion of oxyethylene groups, which are hydrophilic groups, in the molecule, or introducing hydroxy groups at the ends of the polyether chains (Patent Literatures 1 to 4). However, these methods have the problem that, as the water solubility increases, the above-mentioned advantages of the polyether-modified polyorganosiloxanes are reduced.

### PRIOR LITERATURES

### PATENT LITERATURES

[Patent Literature 1] Japanese Patent Application Laid-Open No. 2000-327787
[Patent Literature 2] Japanese Patent Application Laid-Open No. 2003-253166
[Patent Literature 3] Japanese Patent Application Laid-Open No. 2015-054934
[Patent Literature 4] Japanese Patent Application Laid-Open No. 2015-151480

### SUMMARY OF THE INVENTION

### PROBLEM TO BE SOLVED BY THE INVENTION

The present invention was made in view of the above circumstances, and an object of the present invention is to provide a surface modifier containing a water-soluble polyether-modified organopolysiloxane while maintaining the surface characteristics of polyether-modified organopolysiloxanes.

### MEANS FOR SOLVING THE PROBLEMS

As mentioned above, there has been a demand for the development of a surface modifier comprising a highly water-soluble polyether-modified organopolysiloxane that better maintains the characteristics of siloxane, and a coating composition comprising such a surface modifier. As a result of intensive studies conducted to achieve the above object, the present inventor has found that a polyether-modified organopolysiloxane having an oxyethylene group and an oxypropylene group exhibits good water solubility, and that incorporation of the same into a coating composition as a surface modifier makes it possible to provide a coating composition that maintains the surface characteristics of siloxane. Thus, the present invention has been completed.

That is, the present invention provides:
[1] A surface modifier consisting of a polyether-modified organopolysiloxane having an oxyethylene group and an oxypropylene group, wherein the polyether-modified organopolysiloxane has an oxyethylene group content of 35% by mass or less, a 1% by mass aqueous solution of the polyether-modified organopolysiloxane has a haze value at 25°C of 5.0 or less, and the polyether-modified organopolysiloxane has a cloud number of 10 or more.
   The present invention further provides the surface modifier having at least one configuration of the following items [2] and [3].
[2] The surface modifier, wherein the surface modifier is a polyether-modified organopolysiloxane represented by the following formula (1): 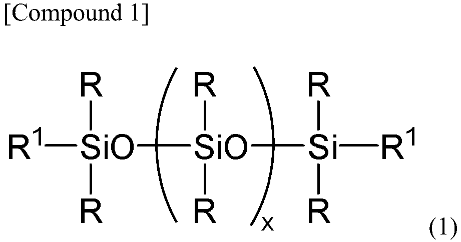 wherein R is, independently of each other, a group selected from an alkyl group having 1 to 10 carbon atoms, an aryl group having 6 to 10 carbon atoms, and an aralkyl group having 7 to 10 carbon atoms, x is an integer of 2 to 100, and R¹ is, independently of each other, a group represented by the following formula (2): 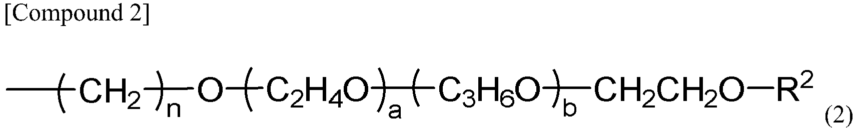 wherein R² is an alkyl group having 1 to 12 carbon atoms or an acetyl group, ***a*** is an integer of 2 to 40, ***b*** is an integer of 1 to 40, n is an integer of 2 to 10, and (***a*** + 1)/(***a*** + ***b*** + 1) is from 0.30 to 0.65, wherein the oxyalkylene groups indicated by ***a*** and ***b*** may be arranged in a block form or in a random form.
[3] The surface modifier, wherein in said formula (1), R is a methyl group, x is an integer of 5 to 60, R² is an alkyl group having 1 to 4 carbon atoms or an acetyl group, and n is 3.
[4] The present invention further provides a composition comprising the surface modifier according to any one of the items [1] to [3], and one or more types of curable compounds.
[5] The present invention further provides a method for using the surface modifier according to any one of the items [1] to [3], comprising adding the surface modifier to a coating composition.
[6] The present invention further provides a method for using the surface modifier according to any one of items [1] to [3], comprising mixing the surface modifier with a curable resin.
[7] The present invention further provides a method for imparting a leveling property to a coating surface, comprising adding the surface modifier according to any one of items [1] to [3] to a curable composition and curing the curable composition to form the coating surface.
[8] The present invention further provides a method for imparting stain resistance to a coating surface, comprising adding the surface modifier according to any one of items [1] to [3] to a curable composition and curing the curable composition to form the coating surface.
[9] The present invention further provides a method for imparting wettability to a coating surface, comprising adding the surface modifier according to any one of items [1] to [3] to a curable composition and curing the curable composition to form the coating surface.
[10] The present invention further provides a method for imparting antistatic properties to a coating surface, comprising adding the surface modifier according to any one of items [1] to [3] to a curable composition and curing the curable composition to form the coating surface.

The present invention also provides the following methods for using the surface modifier.
[11] Use of the surface modifier according to any one of the items [1] to [3] for imparting a leveling property to a coating surface.
[12] Use of the surface modifier according to any one of the items [1] to [3] for imparting a stain resistance to a coating surface.
[13] Use of the surface modifier according to any one of the items [1] to [3] for imparting a wettability to a coating surface.
[14] Use of the surface modifier according to any one of the items [1] to [3] for imparting an antistatic property to a coating surface.

### EFFECTS OF THE INVENTION

The surface modifier of the present invention, containing a polyether-modified organopolysiloxane having an oxyethylene group and an oxypropylene group, maintains the characteristics of siloxane well and is useful in a wide range of applications.

### MODES FOR CARRYING OUT THE INVENTION

The present invention will be explained in detail below, but the present invention is not limited thereto.

The surface modifier of the present invention is a polyether-modified organopolysiloxane having an oxyethylene group and an oxypropylene group, wherein the polyether-modified organopolysiloxane has an oxyethylene group content of 35% by mass or less, a 1% by mass aqueous solution of the polyether-modified organopolysiloxane has a haze value at 25°C of 5.0 or less, and the polyether-modified organopolysiloxane has a cloud number of 10 or more.

The content ratio of the oxyethylene group is preferably 18% by mass or more and 35% by mass or less, even more preferably 20% by mass or more and 33% by mass or less, most preferably 21% by mass or more and 32% by mass or less.

The haze value is preferably 0 or more and 3.0 or less, most preferably 0 or more and 2.0 or less.

The cloud number is preferably 10.3 or more and 18 or less, even more preferably 10.6 or more and 17 or less, most preferably 11.0 or more and 15 or less.

The cloud number of the surface modifier is an index indicating hydrophilicity/hydrophobicity determined by titration, and is calculated according to the following definition.

Cloud number: the number of milliliters of a 2% aqueous phenol solution required for titration at 25 °C of a 5 mL solution prepared by adding ethanol to 0.5 g of the polyether-modified organopolysiloxane.

Generally, hydrophilicity increases as the cloud number increases, and hydrophilicity is considered sufficient when the cloud number is 10 or more.

The polyether-modified organopolysiloxane is preferably a polyether-modified organopolysiloxane represented by the following formula (1).

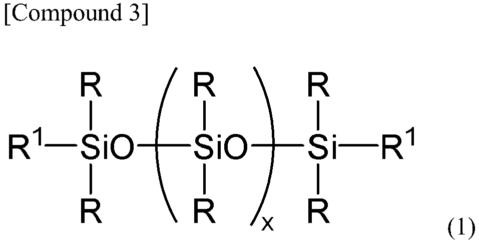

In formula (1), R is, independently of each other, a group selected from an alkyl group having 1 to 10 carbon atoms, an aryl group having 6 to 10 carbon atoms, and an aralkyl group having 7 to 10 carbon atoms. Examples of the alkyl group having 1 to 10 carbon atoms include a methyl group, an ethyl group, a propyl group, a butyl group, a pentyl group, a hexyl group, a cyclohexyl group, an octyl group, and a decyl group. Examples of the aryl group having 6 to 10 carbon atoms include a phenyl group and a tolyl group. Examples of the aralkyl group having 7 to 10 carbon atoms include a benzyl group and a phenethyl group.

Among them, R is preferably a methyl group, an ethyl group, a propyl group, a butyl group, and a phenyl group, even more preferably a methyl group and a phenyl group, most preferably a methyl group.

In formula (1), x is an integer of 2 to 100, preferably 3 to 80, even more preferably 5 to 60, most preferably 5 to 50.

If x is less than 2, the characteristics of siloxane may not be sufficiently exhibited; and if x is more than 100, water solubility may be impaired.

In formula (1), R¹ is, independently of each other, a group represented by the following formula (2).

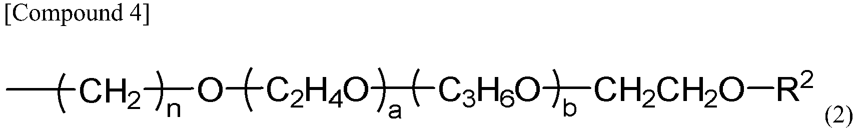

In formula (2), R² is an alkyl group having 1 to 12 carbon atoms or an acetyl group. Examples of the alkyl group having 1 to 12 carbon atoms include a methyl group, an ethyl group, a propyl group, a butyl group, a pentyl group, a hexyl group, a cyclohexyl group, an octyl group, a decyl group, and a lauryl group. Among them, R² is preferably a methyl group, an ethyl group, a propyl group, a butyl group, an octyl group, and an acetyl group, even more preferably a methyl group, an ethyl group, a propyl group, a butyl group, and an acetyl group; however, a methyl group, a butyl group, and an acetyl group are most preferred in view of availability.

In formula (2), n is an integer of 2 to 10, preferably an integer of 3 to 8, and in view of availability, most preferably 3.

In formula (2), ***a*** is an integer of 2 to 40, preferably an integer of 3 to 30, even more preferably an integer of 4 to 25, most preferably an integer of 5 to 20. If ***a*** is less than 2, water solubility is insufficient; whereas if ***a*** is more than 40, the characteristics of siloxane are insufficiently exhibited.

In formula (2), ***b*** is an integer of 1 to 40, preferably an integer of 2 to 30, more preferably an integer of 4 to 25, and most preferably an integer of 5 to 20. If ***b*** is less than 1, compatibility with other materials may be affected, whereas if ***b*** is more than 40, water solubility or the effects of the siloxane moiety may be impaired.

In formula (2), ***a*** and ***b*** are such that (***a*** + 1)/(***a*** + ***b*** + 1) are within a range of 0.30 to 0.65, preferably 0.32 to 0.60, even more preferably 0.34 to 0.55, most preferably 0.36 to 0.52. If ***a*** and ***b*** are such that (***a*** + 1)/(***a*** + ***b*** + 1) are less than the lower limit, water solubility is insufficient; and if ***a*** and ***b*** are such that (***a*** + 1)/(***a*** + ***b*** + 1) is more than the upper limit, the characteristics of siloxane are insufficiently exhibited.

In formula (2), the parenthesized oxyalkylene groups indicated by ***a*** and ***b*** may be arranged in a block form or in a random form.

The present invention provides a surface modifier comprising the polyether-modified polyorganosiloxane described above. By adding the surface modifier to a curable composition, excellent antifoaming property, leveling property, stain resistance, wettability, and antistatic properties are imparted to the surface of a cured product (particularly a coating) obtained by curing the curable composition. The surface modifier of the present invention may be added to any curable composition as long as the curable composition is mixed with the surface modifier and cured. In particular, the surface modifier is preferably used by being added to a thermosetting resin, and is especially suitable as a surface modifier for thermosetting resins.

The present invention further provides a curable composition comprising the surface modifier described above and one or more curable compounds. The content of the surface modifier in the curable composition may be appropriately adjusted according to the type of resin and may be, for example, 0.005 to 10% by mass, preferably 0.01 to 5% by mass. In particular, for surfactant-type applications such as leveling agents and antifoaming agents, it is preferable to add a relatively small amount within this range, whereas for applications utilizing the silicone characteristics of the surface modifier, such as stain resistance and slip properties, it is preferable to add a relatively large amount within this range. Furthermore, when the surface modifier is added to a thermosetting resin, it is preferable to add the surface modifier in the form of master pellets so that the surface modifier is uniformly dispersed in the thermosetting resin. In such a case, the content of the surface modifier in the curable composition of the master pellet may be appropriately adjusted according to the type of resin and may be, for example, 1 to 50% by mass, preferably 3 to 40% by mass.

The curable compound is preferably a thermosetting compound. Examples of the thermosetting compound include, for example, a compound having a hydroxyl group, a compound having a carboxyl group, a compound having an amino group, a compound having an epoxy group, a compound having a mercapto group, a compound having an isocyanate group, a compound having a hydrolyzable silyl group, a compound having a silanol group, a compound having a carboxylic anhydride group, an acrylic resin, a urethane resin, an epoxy resin, a melamine resin, a silicone resin, and the like.

The method for preparing the curable composition containing the surface modifier of the present invention is not particularly limited, and the curable composition may be prepared by mixing the surface modifier, the curable compound, and, if necessary, optional additives and solvents according to conventional methods. The curing conditions may be appropriately selected according to conventional methods depending on the type of curable compound used. When a curable composition comprising the surface modifier of the present invention is applied to a substrate surface and cured, excellent antifoaming property, leveling property, stain resistance, wettability, and antistatic property are imparted to the surface of the cured product (coating).

### EXAMPLES

The present invention will be explained in more detail with reference to the following Examples and Comparative Examples; however, the present invention is not limited to the following Examples.

### Haze value

The haze values of 1% by mass aqueous solutions of the following polyether-modified polyorganosiloxanes were measured at 25 °C using the device described below and a cell with a path length of 1 cm. A blank (air) measurement was first performed at 25 °C, and then the haze value of each sample was measured.
Device: Haze Meter NDH-4000 (Nippon Denshoku Industries Co., Ltd.)

### Synthetic Example 1

In a reaction vessel, 692 g of the polyether of the following formula (3) and 220 g of the siloxane of the following formula (4) were charged. Then, 76 mg of a 3% by mass isopropyl alcohol solution of chloroplatinic acid was added, and the mixture was reacted at 90 °C for 2 hours. 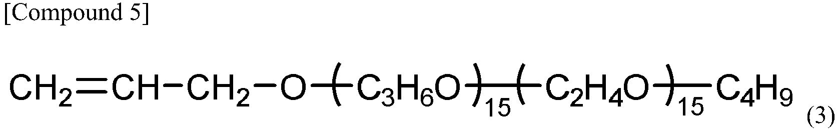 wherein the oxyalkylene groups were arranged in a block structure having the sequence shown above.

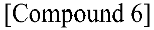

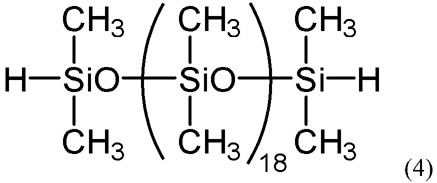

After the reaction, volatile components were removed at 100 °C under 3 torr for 1 hour, followed by filtration to obtain 862 g of the desired polyether-modified siloxane of the following formula (A). 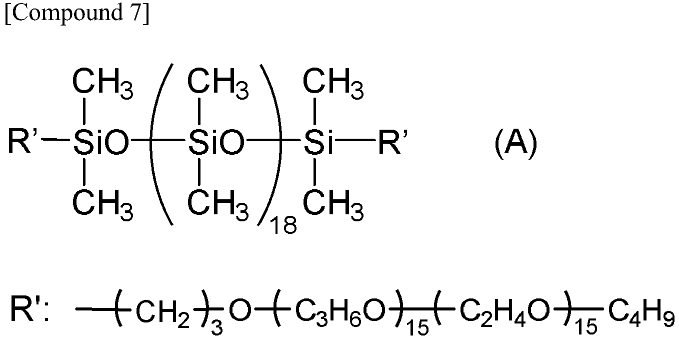 wherein the oxyalkylene groups were arranged in a block structure having the sequence shown above.

The content ratio of the oxyethylene group in the polyether-modified siloxane thus obtained was 28% by mass, the haze value of a 1% by mass aqueous solution was 0.18 at 25°C, and the cloud number was 12.9. Furthermore, the value of (***a** +* 1)/(***a** + b +* 1) in formula (2) was 0.5.

### Synthetic Example 2

The procedures of Synthetic Example 1 were repeated, except that 440 g of the siloxane of the following formula (6) was used instead of 220 g of the siloxane of formula (4), to obtain 1,072 g of a polyether-modified siloxane of the following formula (B). 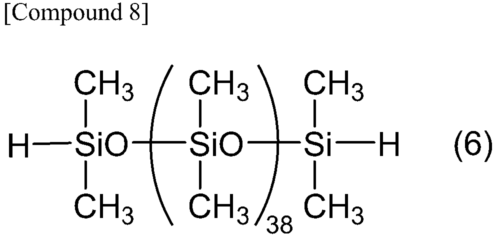 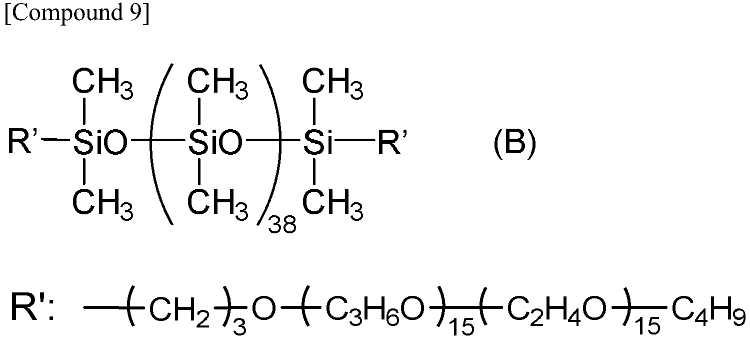 wherein the oxyalkylene groups were arranged in a block structure having the sequence shown above.

The content ratio of the oxyethylene group in the polyether-modified siloxane thus obtained was 21% by mass, the haze value of a 1% by mass aqueous solution was 2.8 at 25°C, and the cloud number was 10.3. Furthermore, the value of (***a** +* 1)/(***a** + b +* 1) in formula (2) was 0.5.

### Synthetic Example 3

The procedures of Synthetic Example 1 were repeated, except that 687 g of a polyether of the following formula (7) was used instead of 692 g of the polyether of formula (3), to obtain 859 g of a polyether-modified siloxane of the following formula (C). 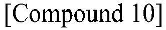 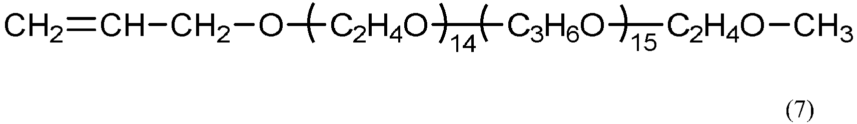 wherein the two parenthesized oxyalkylene groups were arranged in a random structure. 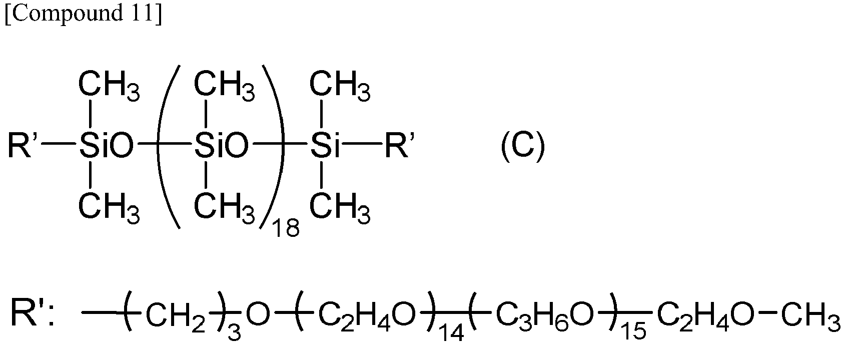 wherein the two parenthesized oxyalkylene groups were arranged in a random structure.

The content ratio of the oxyethylene group in the polyether-modified siloxane thus obtained was 29% by mass, the haze value of a 1% by mass aqueous solution was 0.15 at 25°C, and the cloud number was 11.3. Furthermore, the value of (***a** +* 1)/(***a** + b +* 1) in formula (2) was 0.5.

### Synthetic Example 4

The procedures of Synthetic Example 1 were repeated, except that 692 g of a polyether of the following formula (8) was used instead of 692 g of the polyether of formula (3), to obtain 859 g of a polyether-modified siloxane of the following formula (D). 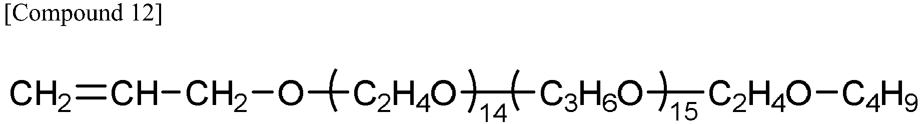 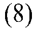 wherein the two parenthesized oxyalkylene groups were arranged in a random structure. 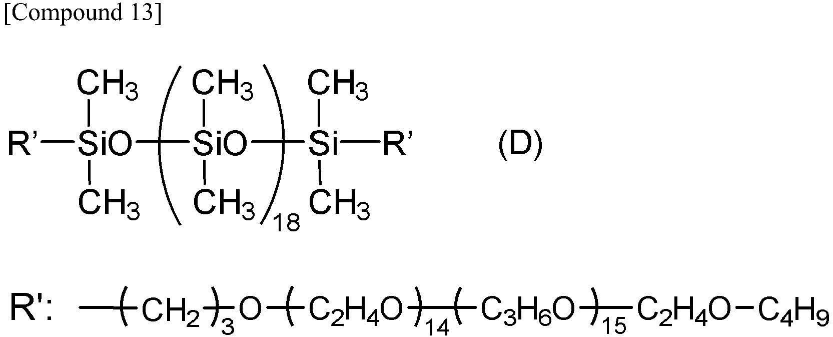 wherein the two parenthesized oxyalkylene groups were arranged in a random structure.

The content ratio of the oxyethylene group in the polyether-modified siloxane thus obtained was 28% by mass, the haze value of a 1% by mass aqueous solution was 0.18 at 25°C, and the cloud number was 11.1. Furthermore, the value of (***a** +* 1)/(***a** + b +* 1) in formula (2) was 0.5.

### Synthetic Example 5

The procedures of Synthetic Example 1 were repeated, except that 578 g of a polyether of the following formula (9) was used instead of 692 g of the polyether of formula (3), to obtain 751 g of a polyether-modified siloxane of the following formula (E). 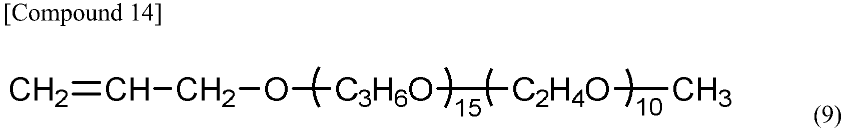 wherein the oxyalkylene groups were arranged in a block structure having the sequence shown above. 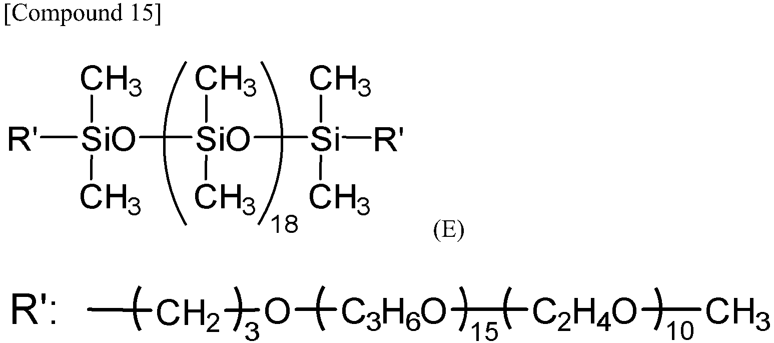 wherein the oxyalkylene groups were arranged in a block structure having the sequence shown above.

The content ratio of the oxyethylene group in the polyether-modified siloxane thus obtained was 21% by mass, the haze value of a 1% by mass aqueous solution was 1.1 at 25°C, and the cloud number was 11.9. Furthermore, the value of (***a** +* 1)/(***a** + b +* 1) in formula (2) was 0.4.

### Comparative Synthetic Example 6

The procedures of Synthetic Example 1 were repeated, except that 856 g of a polyether of the following formula (10) was used instead of 692 g of the polyether of formula (3), to obtain 1,018 g of a polyether-modified siloxane of the following formula (F). 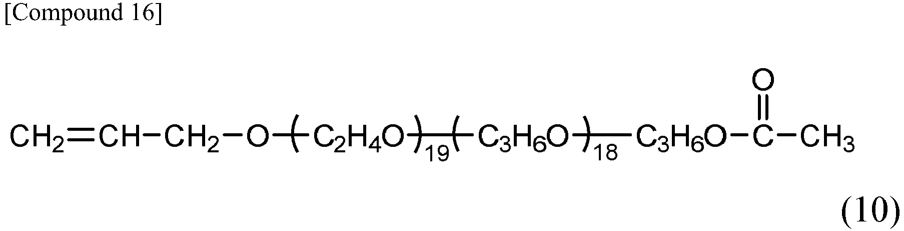 wherein the two parenthesized oxyalkylene groups were arranged in a random structure. 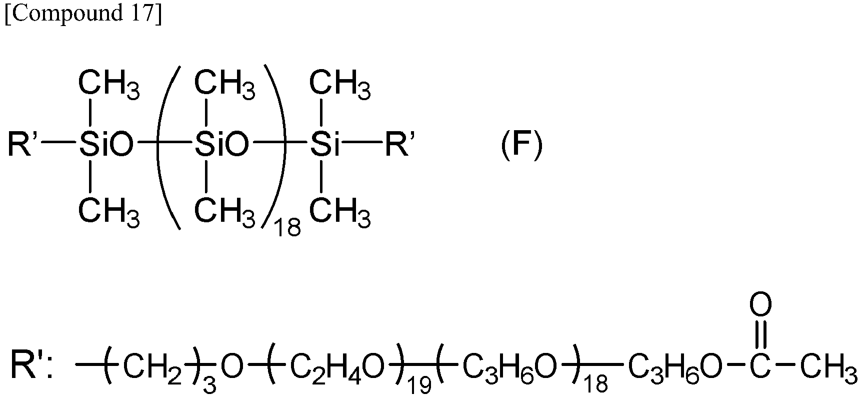 wherein the two parenthesized oxyalkylene groups were arranged in a random structure.

The content ratio of the oxyethylene group in the polyether-modified siloxane thus obtained was 30% by mass, a 1% by mass aqueous solution at 25°C was turbid, the haze value at 25°C was 98, and the cloud number was 10.1. Furthermore, the value of (***a** +* 1)/(***a** + b +* 1) in formula (2) was 0.5.

### Comparative Synthetic Example 7

The procedures of Example 1 were repeated, except that 692 g of a polyether of the following formula (11) was used instead of 692 g of the polyether of formula (3), to obtain 858 g of a polyether-modified siloxane of the following formula (G).

### [Compound 18]

CH₂=CH-CH₂-O-(C₂H₄O)₁₅(C₃H₆O)₅-(C₃H₆O)₁₀-C₄H₉ (11)

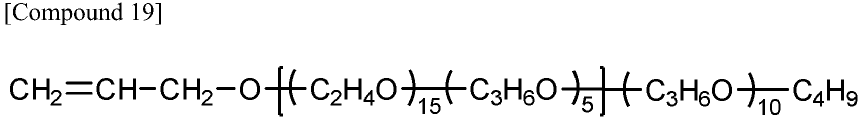

wherein the oxyalkylene groups in the square-bracketed portion are randomly arranged, and the linkage between this portion and the oxyalkylene groups of the -(C₃H₆O)₁₀-portion has a block structure. 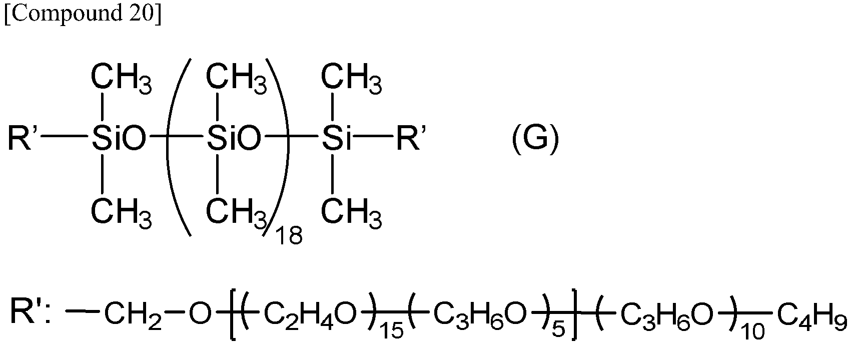 wherein the oxyalkylene groups in the square-bracketed portion are randomly arranged, and the linkage between this portion and the oxyalkylene groups of the -(C₃H₆O)₁₀-portion has a block structure.

The content ratio of the oxyethylene group in the polyether-modified siloxane thus obtained was 28% by mass, a 1% by mass aqueous solution at 25°C was turbid, the haze value at 25°C was 99, and the cloud number was 8.9. Furthermore, the value of (***a** +* 1)/(***a** + b +* 1) in formula (2) was 0.5.

### Comparative Synthetic Example 8

The procedures of Example 1 were repeated, except that 1,036 g of a polyether of the following formula (12) was used instead of 692 g of the polyether of formula (3), to obtain 1,178 g of a polyether-modified siloxane of the following formula (H). 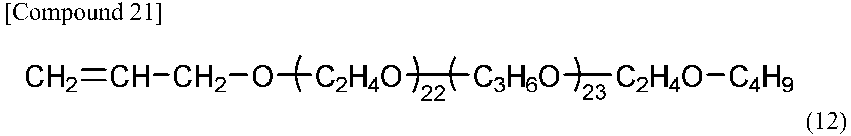 wherein the two parenthesized oxyalkylene groups were arranged in a random structure. 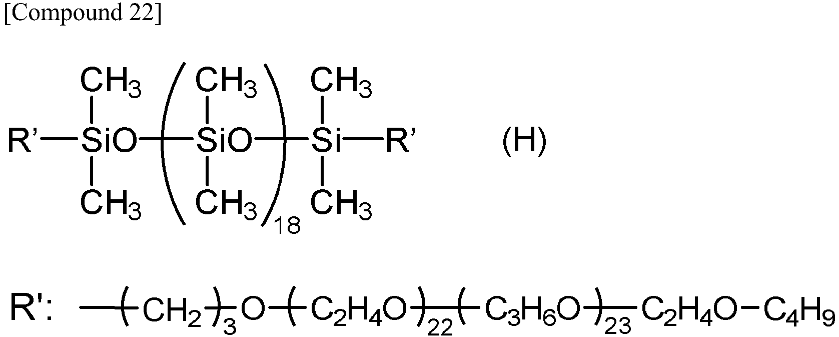 wherein the two parenthesized oxyalkylene groups were arranged in a random structure.

The content ratio of the oxyethylene group in the polyether-modified siloxane thus obtained was 31.5% by mass, the haze value of a 1% by mass aqueous solution at 25°C was 0.31, and the cloud number was 9.6. Furthermore, the value of (***a** +* 1)/(***a** + b* + 1) in formula (2) was 0.5.

### Comparative Synthetic Example 9

The procedures of Example 1 were repeated, except that 600 g of a polyether of the following formula (13) was used instead of 692 g of the polyether of formula (3), to obtain 769 g of a polyether-modified siloxane of the following formula (I). 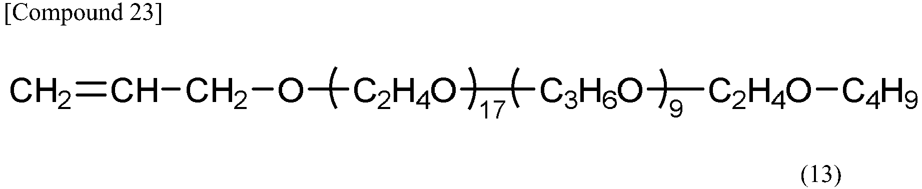 wherein the two parenthesized oxyalkylene groups were arranged in a random structure. 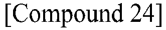 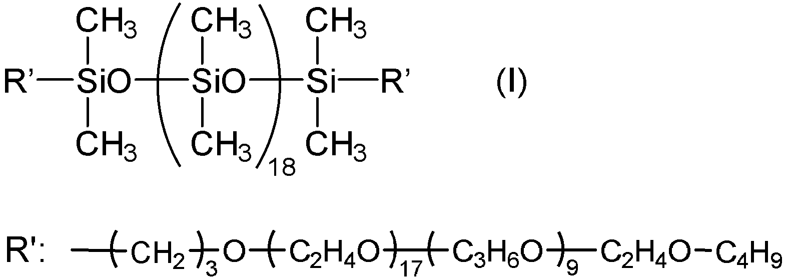 wherein the two parenthesized oxyalkylene groups were arranged in a random structure.

The content ratio of the oxyethylene group in the polyether-modified siloxane thus obtained was 37% by mass, the haze value of a 1% by mass aqueous solution at 25°C was 0.69, and the cloud number was 13.6. Furthermore, the value of (***a** +* 1)/(***a** + b +* 1) in formula (2) was 0.67.

The properties of the polyether-modified siloxanes (the surface modifiers) obtained in the Synthetic Examples and the Comparative Synthetic Examples are summarized in the following Table 1.

**[Table 1]**

| | Polyether-modified siloxane | Content ratio of the oxyethylene group, % by mass | Haze value | Cloud number |
|---|---|---|---|---|
| Synthetic Example 1 | Compound (A) | 28 | 0.18 | 12.9 |
| Synthetic Example 2 | Compound (B) | 21 | 2.8 | 10.3 |
| Synthetic Example 3 | Compound (C) | 29 | 0.15 | 11.3 |
| Synthetic Example 4 | Compound (D) | 28 | 0.18 | 11.1 |
| Synthetic Example 5 | Compound (E) | 21 | 1.1 | 11.9 |
| Comparative Synthetic Example 6 | Compound (F) | 30 | 98 | 10.1 |
| Comparative Synthetic Example 7 | Compound (G) | 28 | 99 | 8.9 |
| Comparative Synthetic Example 8 | Compound (H) | 31 | 0.31 | 9.6 |
| Comparative Synthetic Example 9 | Compound (I) | 37 | 0.69 | 13.6 |

Water-based coating compositions containing the various polyether-modified siloxanes prepared above as surface modifiers were prepared, and the following evaluations were conducted.

### Example 1

A water-based coating composition was prepared by uniformly mixing 115 g of Bayhydrol A 2651 (manufactured by Covestro; a water-based dispersion containing 41% acrylic resin), 10 g of water, 20 g of Bayhydur XP 2655 (manufactured by Covestro; an isocyanate-based curing agent for aqueous systems), and 2.0 g of Compound (A) obtained in Synthetic Example 1. The mixture was allowed to stand for 30 minutes. Thereafter, the coating composition thus obtained was applied onto a glass substrate using an applicator so as to give a thickness of 30 µm, and was thermally cured at 80°C for 90 minutes to form Coating Layer (1). The coating layer thus obtained was evaluated as follows.

### Examples 2 to 5

The procedures of Example 1 were repeated, except that Compounds (B) to (E) were used instead of Compound (A) of Example 1, to form Coating Layers (2) to (5), which was evaluated for various characteristics.

### Comparative Example 1

The procedures of Example 1 were repeated, except that Compound (A) was not added, to form Coating Layer (6), which was evaluated for various characteristics.

### Comparative Examples 2 to 5

The procedures of Example 1 were repeated, except that Compounds (F) to (I) were used instead of Compound (A) of Example 1, to form Coating Layers (7) to (10), which was evaluated for various characteristics.

### ·Antifoaming property

The coating composition was uniformly mixed, and the state of foam disappearance after standing for 10 minutes was observed and evaluated according to the following criteria.
A: No foam is observed.
B: Slight amount of fine foam is observed.
C: Large amount of foam is observed.

### ·Leveling properties

The surface condition of the coating layer formed on glass was visually observed and evaluated according to the following criteria.
A: Smooth surface is observed.
B: Fine craters are observed in some places on the surface.
C: Color unevenness, large craters and surface waviness are observed.

### ·Stain resistance

A line was drawn on the coating layer formed on glass using an oil-based marker pen, and the ease of removing the line by wiping with tissue paper was evaluated according to the following criteria.
A: The line is easily removed.
B: The line is removed by repeated wiping with pressure.
C: The line cannot be removed.

The results of Examples 1 to 5 and Comparative Examples 1 to 5 are shown in the following Table 2.

**[Table 2]**

| | | Surface modifier | Antifoaming property | Leveling property | Stain resistance |
|---|---|---|---|---|---|
| Example 1 | Coating layer (1) | Compound (A) | A | A | A |
| Example 2 | Coating layer (2) | Compound (B) | A | A(B) | A |
| Example 3 | Coating layer (3) | Compound (C) | A | A | A |
| Example 4 | Coating layer (4) | Compound (D) | A | A | A |
| Example 5 | Coating layer (5) | Compound (E) | A | A | A |
| Comparative Example 1 | Coating layer (6) | - | B | C | C |
| Comparative Example 2 | Coating layer (7) | Compound (F) | A | C | B |
| Comparative Example 3 | Coating layer (8) | Compound (G) | B | C | B |
| Comparative Example 4 | Coating layer (9) | Compound (H) | C | C | C |
| Comparative Example 5 | Coating layer (10) | Compound (I) | B | B | C |

As shown in Table 2, Coating Layers (1) to (5), which were formed using water-based coating additives containing the surface modifier of the present invention, exhibited good antifoaming property, leveling property, and stain resistance.

On the other hand, in Comparative Example 1, in which a water-based coating additive not containing a polyether-modified siloxane was used, good results were not obtained in terms of antifoaming property, leveling property, or stain resistance. Furthermore, in Comparative Examples 2 to 4, color unevenness was observed on the surfaces of the coating layers, poor smoothness was observed, and stain resistance was insufficient. In Comparative Example 5, although color unevenness was not observed on the surface of the coating layer, leveling property and antifoaming property were insufficient, and stain resistance was also unsatisfactory.

The present invention is not limited to the above embodiments, which are provided for illustrative purposes only. Any embodiments having substantially the same configuration and providing substantially the same effects as those described in the claims are included within the scope of the present invention.

## Claims

1. A surface modifier consisting of a polyether-modified organopolysiloxane having an oxyethylene group and an oxypropylene group, wherein
the polyether-modified organopolysiloxane has an oxyethylene group content of 35% by mass or less, a 1% by mass aqueous solution of the polyether-modified organopolysiloxane has a haze value at 25°C of 5.0 or less, and the polyether-modified organopolysiloxane has a cloud number of 10 or more.

2. The surface modifier according to claim 1, wherein the surface modifier is a polyether-modified organopolysiloxane represented by the following formula (1): 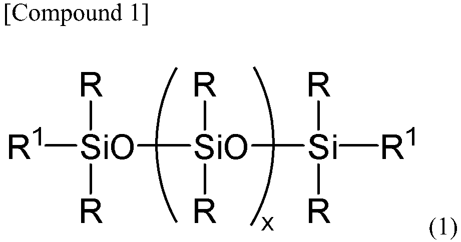 wherein R is, independently of each other, a group selected from an alkyl group having 1 to 10 carbon atoms, an aryl group having 6 to 10 carbon atoms, and an aralkyl group having 7 to 10 carbon atoms, x is an integer of 2 to 100, and R¹ is, independently of each other, a group represented by the following formula (2): 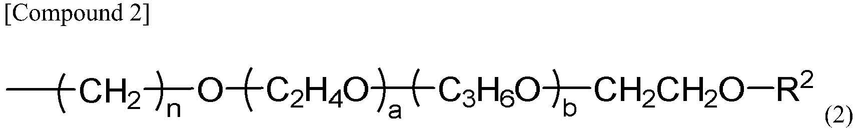 wherein R² is an alkyl group having 1 to 12 carbon atoms or an acetyl group, ***a*** is an integer of 2 to 40, ***b*** is an integer of 1 to 40, n is an integer of 2 to 10, and (***a*** + 1)/(***a*** + ***b*** + 1) is from 0.30 to 0.65, wherein the oxyalkylene groups indicated by ***a*** and ***b*** may be arranged in a block form or in a random form.

3. The surface modifier according to claim 2, wherein in said formula (1), R is a methyl group, x is an integer of 5 to 60, R² is an alkyl group having 1 to 4 carbon atoms or an acetyl group, and n is 3.

4. A composition comprising the surface modifier according to any one of claims 1 to 3, and one or more types of curable compounds.

5. A method for using the surface modifier according to any one of claims 1 to 3, comprising adding the surface modifier to a coating composition.

6. A method for using the surface modifier according to any one of claims 1 to 3, comprising mixing the surface modifier with a curable resin.

7. A method for imparting a leveling property to a coating surface, comprising adding the surface modifier according to any one of claims 1 to 3 to a curable composition and curing the curable composition to form the coating surface.

8. A method for imparting stain resistance to a coating surface, comprising adding the surface modifier according to any one of claims 1 to 3 to a curable composition and curing the curable composition to form the coating surface.

9. A method for imparting wettability to a coating surface, comprising adding the surface modifier according to any one of claims 1 to 3 to a curable composition and curing the curable composition to form the coating surface.

10. A method for imparting antistatic properties to a coating surface, comprising adding the surface modifier according to any one of claims 1 to 3 to a curable composition and curing the curable composition to form the coating surface.
